# EUROPEAN PATENT SPECIFICATION

(11) **EP 1 448 327 B1**
(45) Date of publication and mention of the grant of the patent: **26.03.2008**
(21) Application number: 02784346.5
(22) Date of filing: 31.10.2002
(51) Int. Cl.: B21D 37/16

(54) **INTERNALLY COOLED PUNCH ASSEMBLY**
INNENGEKÜHLTER STEMPEL
POINçON A REFROIDISSEMENT INTERNE

(30) Priority: 02.11.2001 US 3641
(43) Date of publication of application: 25.08.2004
(73) Proprietor: Sequa Can Machinery Inc., East Rutherford NJ 07073 (US)
(72) Inventor: BLUE, Rodney, Huntington Beach, CA 92649 (US)
(74) Representative: Nöth, Heinz
(86) International application number: PCT/US2002/034895
(87) International publication number: WO 2003/039783

(56) References cited:
- IT-B- 499 298
- US-A- 3 577 753
- US-A- 4 148 208
- US-A- 4 502 313
- US-A- 5 678 442
- US-B1- 6 216 511

## Description

### BACKGROUND OF THE INVENTION

### 1. Field of the Invention:

The present invention relates generally to punches useful in forming cans from cups and particularly for two piece can forming, and more specifically to such punches that are internally cooled.

### 2. Brief Description of the Related Art:

Forming machines are used to form the bodies of metal containers. A shallow metal cup is driven through a set of annular forming dies by a punch to form the more elongate body of the can, e.g. in a known drawing and ironing process. An example of a conventional can forming machine is shown in U.S. Patent No. 4,173,882.

A separate punch typically is removably.secured on the leading end of a reciprocating ram in a drawing and ironing machine. The punch provides an inner mandrel on which the can is shaped, drawn, and ironed as it passes through successive dies. The temperature of the punch should be controlled against the heat generated in the punch by repeated frictional contact between the punch, the inside of the can body, and the dies past which the punch moves.

In conventional can formation, externally applied cooling fluids maintain operational temperature conditions. In some can forming applications, however, it is desirable to exclude the conventional use of external cooling fluids. The external cooling fluids may contaminate the container surfaces which would then require post-formation cleaning processes that are costly and may be environmentally undesirable.

U.S. Pat. No. 4,502,313, discloses a single coolant inlet passage and a single coolant outlet passage which allow a coolant liquid to flow through a spiral groove adjacent the interior of the punch. U.S. Pat. No. 5,687,604, U.S. Pat. Nos. 5,233,912 and 5,048,592, and U.S. Pat. No. 5,678,442 disclose cooling fluid supply and discharge tubes through central conduits. U.S. Pat. No. 6,035,688 utilizes a single, continuous passage to supply coolant.

US-A-4148208 which is considered in the preamble of claim 1 discloses single cylindrically shaped passages for the fluid inlet supplying the cooling medium to the internal surface of the punch and for the fluid outlet removing the cooling medium from the internal surface of the punch.

The prior art systems are disadvantageous because they do not minimize circumferential direction temperature gradients within the ram and do not provide uniform cooling of the punch.

### SUMMARY OF THE INVENTION

The present invention is defined in claim 1. The present invention overcomes disadvantages ofprior art internally cooled punches by supplying fluid, and particularly liquid coolant, through a plurality of annularly arranged fluid transfer tubes to radially arranged ports. Each port feeds into a series of individual partially circumferential channels or a single circumferential channel around and adjacent the interior surface of the punch that is disposed on and over the end region of the ram inside the punch. The internally cooled punch does not require the use of external cooling fluids. The external temperature of the punch can be monitored continuously, e.g. by direct contact with the punch or by monitoring the temperature of the fluid that cooled the punch, and the cooling fluid medium temperature can be adjusted automatically to maintain acceptable punch temperatures.

Cooling fluid medium is supplied by a temperature control unit and is delivered to the punch through a series of tubes running through the ram. Inlet tubes direct cooling medium toward the distal or leading end of the ram and the punch there. Outlet tubes located more proximally or rearward return the cooling medium out of the punch. Multiple parallel inlet and outlet tubes are spaced circumferentially and symmetrically around the periphery of the punch, with inlet and outlet tubes alternating to distribute the fluid media uniformly around the inner surface of the punch. The multiple fluid inlet and outlet design with symmetrical porting helps assure that the punch temperature remains constant, minimizing circumferential temperature gradients.

Preferably, the fluid transfer tubes are constructed from materials with low thermal transfer properties to minimize heat transfer to the wall of the ram inside the punch. Minimizing heat transfer between the fluid medium and the ram is desirable to maintain accurate fluid heat transfer between the fluid medium and the ram, accurate fluid media inlet temperatures and to minimize ram distortion due to thermal gradients. Circumferential thermal gradients in the ram may distort the ram, adversely altering punch alignment.

Porting between the transfer tubes is circumferentially symmetrical, with alternating inlet and outlet ports, to minimize any circumferential temperature gradients that could transfer to and distort the ram or the surface of the punch. The symmetrically alternating inlet and outlet ports uniformly distribute the fluid medium radially to the inner surface of the punch around the outside of the ram. The transfer tubes also surround a separate central port for air flow and aids that flow in stripping the container from the punch.

Other features and advantages of the present invention will become apparent from the following description of the invention which refers to the accompanying drawings.

### BRIEF DESCRIPTION OF THE DRAWINGS

Fig. 1 is an elevational cross section of an internally cooled punch assembly according to the present invention.
Fig. 2 is an elevational cross section of the punch assembly of Fig. 1 and illustrating cooling fluid medium pathways flowing into the assembly.
Fig. 3 is a cross sectional plan view detailing an inlet manifold of the punch assembly of Fig. 1.
Fig. 4 is an enlarged view of the distal end of the punch assembly shown in Fig. 2 and illustrating the supply of fluid cooling medium.
Fig. 5 is a cross section showing the proximal end of the punch assembly of Fig. 1 and illustrating fluid flow to the punch.
Fig. 6 is a cross section of the punch assembly of Fig. 1 showing fluid cooling medium discharge pathways.
Fig. 7 is a cross sectional plan view detailing an outlet manifold of the punch assembly of Fig. 1.
Fig. 8 is an enlarged view of the distal end of a punch assembly as shown in Fig. 2 and illustrating cooling media discharge from the punch.

### DETAILED DESCRIPTION OF A PREFERRED EMBODIMENT OF THE INVENTION

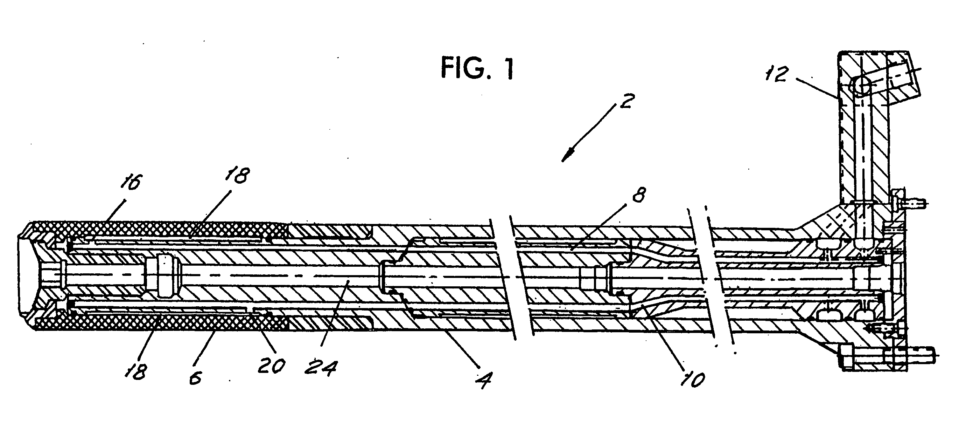

Fig. 1 shows an internally cooled punch assembly 2 according to the present invention in cross section. The assembly includes a reciprocable ram 4 which is conventionally reciprocated through a series of dies (not shown) of a container forming tool assembly (not shown). The distal, outer or leading end region of the ram is of narrowed external diameter. A punch 6 is removably disposed on the narrowed distal end region of the ram.

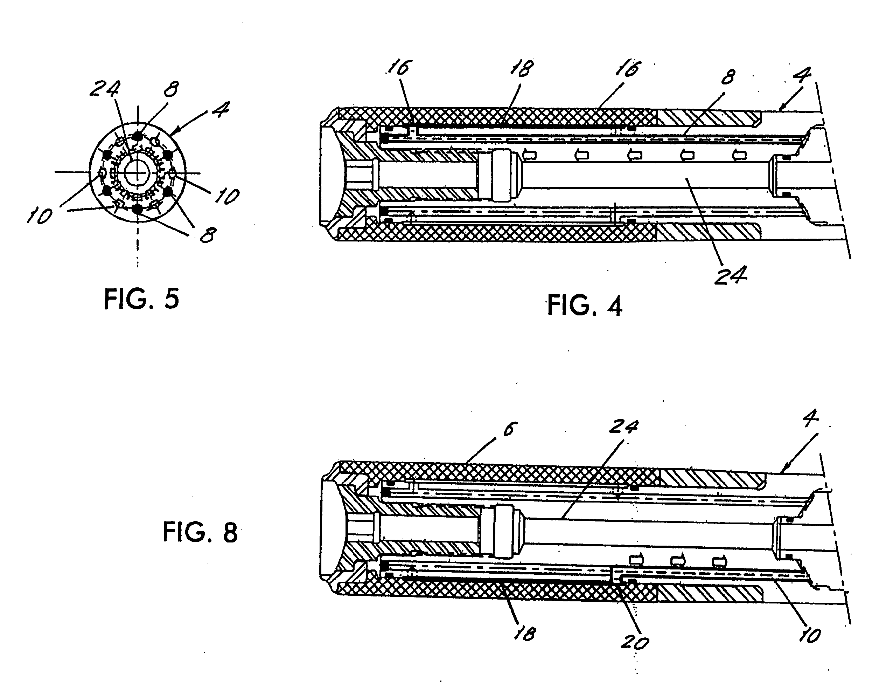

As seen in Figs. 1 and 5, a plurality of fluid transfer inlet tubes **8** for supplying fluid cooling medium and a plurality of fluid transfer outer tubes **10** for discharging the cooling medium are formed within the ram **4**, annularly in a circumferential, symmetrical arrangement, with tubes **8** and **10** alternating. A manifold **12** for connection to a temperature control unit **13** is provided on a proximal end of the punch assembly and connects to at least one of the tubes **8** and/or **10**.

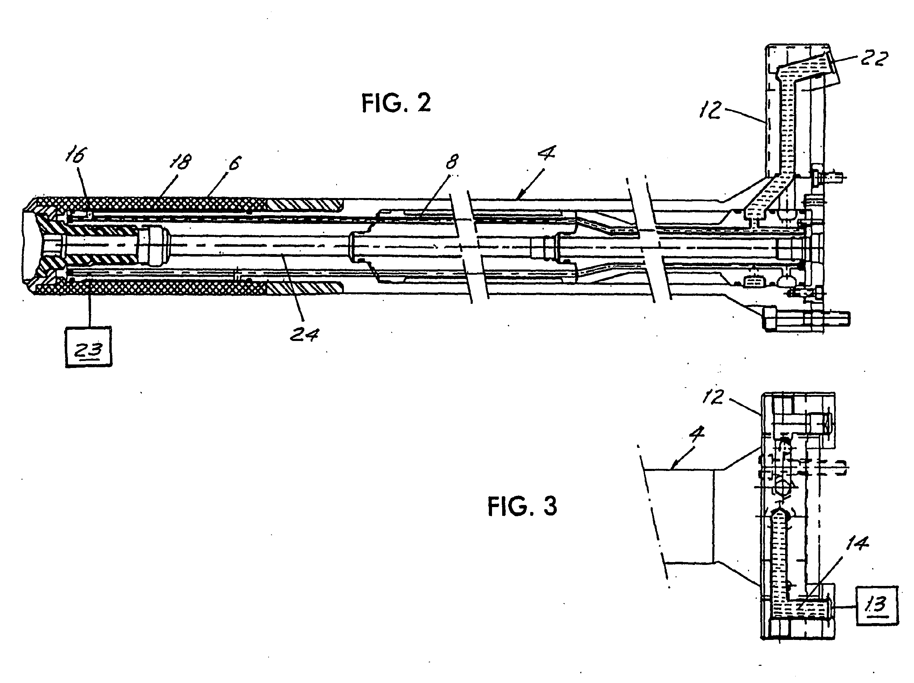

Figs. 2-5 show the supply of fluid cooling medium to the punch. Figure 2 illustrates flow of cooling medium from a fluid medium temperature control unit **13** of conventional design (Fig. 3) into an inlet portion of manifold **12** into ram **4** toward the distal end along inlet transfer tubes **8** as shown by arrows in Fig. 4. The inlet portion **14** of manifold **12** is shown in Fig. 3. When the inlet portion **14** is nearly at the distal end, the cooling medium flows radially outward from tubes **8** through radial port **16** to a channel or clearance **18** extending along the inner or bore surface of the punch **6**.

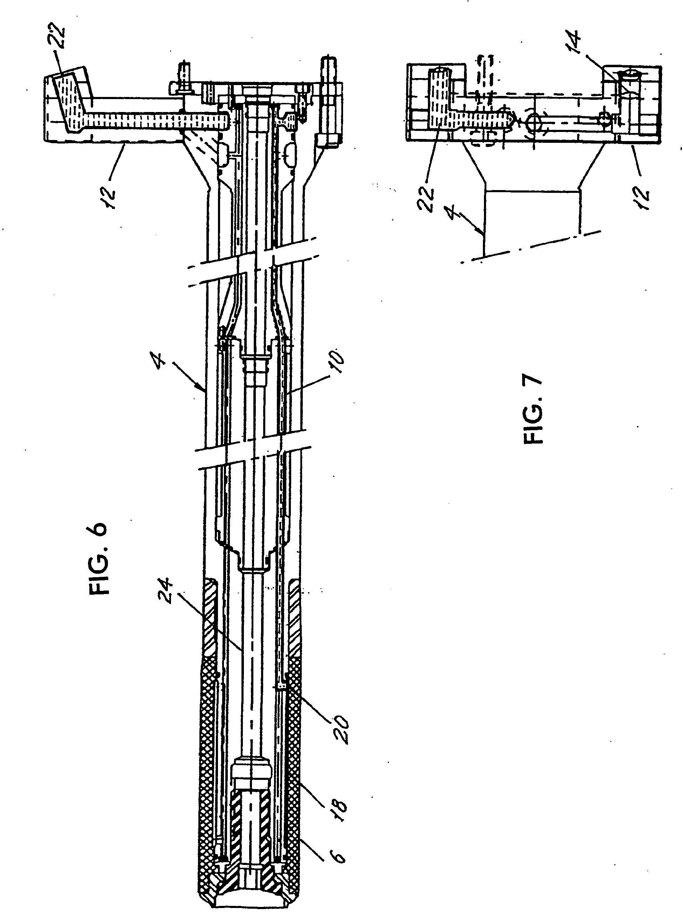

Figs. 6-8 show the discharge of the cooling medium from the punch. Fig. 6 illustrates the flow of cooling medium from the proximal end of the clearance or channel **18**, radially through an outlet port **20** exiting channel **18** to an outlet **22** of the manifold **12**. The cooling medium flows rearward or proximally along outlet transfer tube **10**, with the direction of outlet flow indicated by the arrows in Fig. 8.

Fig. 5 shows that the respective pluralities of inlet **8** and outlet tubes **10** are provided in ram **4** in an alternating annular arrangement. Similarly, inlet ports **16** and outlet ports **20** to fluid channel **18** are provided in a symmetrical, annular arrangement to distribute the cooling medium uniformly to the inner surface of the punch. The clearance or channel **18** may comprise a series of individual partially circumferential passages or channels or a single circumferential channel around the inside of the punch with spaced supports for the punch located in that clearance. Since the respective inlet **8** and outlet **10** tubes are circumferentially offset, either the clearance is circumferentially large enough and/or the inlet and outlet ports **16** and **20** are angled such that medium will flow inside the punch as described.

Fluid transfers tubes **8** and **10** are formed of materials with low thermal transfer properties to minimize heat transfer between the fluid medium and the ram, to maintain accurate fluid medium inlet temperatures and to minimize ram distortion due to circumferential thermal gradients. Such thermal gradients would be adverse to maintaining the straightness of the ram. The temperature of the ram is cooled by the fluid medium, and cooled uniformly to maintain straightness. Furthermore, the fluid may also be heated to warm the ram, for example at machine startup. This may be desired to minimize thermal expansion effects and improve the drawing, ironing and stripping processes.

To maintain a correct temperature level, the temperature of the punch may be continuously monitored by a thermometer probe **23** communicating with the punch **6** near the distal end thereof, e.g. at the exterior or at the interior of the punch, at the exterior of the ram or monitoring the temperature of the liquid in the clearance **18**.

A separate central port **24** disposed axially in ram **4** is used for air flow to aid in stripping the formed container from the punch.

Although the present invention has been described in relation to particular embodiments thereof, many other variations and modifications and other uses will become apparent to those skilled in the art. Therefore, the present invention is to be limited not by the specific disclosure herein, but only by the appended claims.

## Claims

1. A punch assembly (2) for producing a container body by driving a formable cup through a ring type die means, the punch assembly (2) comprising:
a ram (4) having proximal and distal ends;
a punch (6) disposed over the distal end of the ram (4), the punch (6) having an internal surface;
a manifold (12) connected to the proximal end of the ram (4); **characterised in**
an annular array of circumferentially spaced fluid inlet tubes (8) in the ram (4) for supplying cooling fluid medium from the manifold (12) toward the distal end of the ram (4); and
a plurality of radial inlet ports (16) from the inlet tubes (8) to the internal surface for supplying the cooling medium into a series of individual partially circumferential channels or a single circumferential channel around and adjacent the internal surface of the punch (6);
an annular array of circumferentially spaced fluid outlet tubes (10) in the ram (4) for removing cooling medium;
a plurality of radial outlet parts (20) from the internal surface, and spaced from the inlet ports (16) along the length of the ram (4) for transferring cooling medium from the series of individual partially circumferential channels or the single circumferential channel around and adjacent the internal surface of the punch (6) to the outlet tubes (10).

2. The punch assembly of claim 1, wherein the inlet ports (16) are more distal and the outlet ports (20) are more proximal along the ram (4), with the internal surface defining a clearance between each inlet port and at least one outlet port.

3. The punch assembly of claim 1, wherein the annular arrays of inlet tubes (8) and outlet tubes (20) are arranged with the inlet and outlet tubes alternating.

4. The punch assembly of claim 3, wherein the inlet and outlet tubes (8, 20) are parallel.

5. The punch assembly of claim 1, wherein the punch (6) has a proximal end and the outlet ports (20) are near the proximal end of the punch (6).

6. The punch assembly of claim 1, further comprising a central port in the ram (4) for air flow to aid in stripping the container from the punch (6).

7. The punch assembly of claim 1, further comprising a temperature control unit for supplying the cooling medium into the manifold (12).

8. The punch assembly of claim 7, further comprising means for monitoring the external temperature of the punch (6) for controlling the cooling medium temperature.

9. The punch assembly of claim 1, wherein the transfer tubes (8, 10) are constructed from materials having low thermal transfer properties.

## Patentansprüche

1. Stempelanordnung (2) für die Herstellung eines Behälterkörpers durch Treiben einer formbaren Schale durch ein Ringtyp-Formmittel, wobei die Stempelanordnung (2) umfasst:
einen Stößel (4), der proximale und distale Enden aufweist;
einen Stempel (6), der über dem distalen Ende des Stößels (4) angeordnet ist, wobei der Stempel (6) eine Innenoberfläche aufweist;
einen Verteiler (12), der mit dem proximalen Ende des Stößels (4) verbunden ist;
**gekennzeichnet durch**:
eine ringförmige Anordnung von in Umfangsrichtung beabstandeten Fluideinlassrohren (8) im Stößel (4) zum Zuführen von Kühlfluidmedium vom Verteiler (12) in Richtung zum distalen Ende des Stößels (4);
mehrere radiale Einlassöffnungen (16) von den Einlassrohren (8) zu der Innenoberfläche zum Zuführen des Kühlmediums in eine Reihe von individuellen, partiellen Umfangskanälen oder in einen einzelnen Umfangskanal um die Innenoberfläche des Stempels (6) und benachbart zu dieser;
eine ringförmige Anordnung von in Umfangsrichtung beabstandeten Fluidauslassrohren (10) im Stößel (4) zum Abführen des Kühlmediums; und
mehrere radiale Auslassöffnungen (20) aus der Innenoberfläche, beabstandet von den Einlassöffnungen (16) längs der Länge des Stößels (4), zum Transportieren des Kühlmediums von der Reihe der individuellen, partiellen Umfangskanäle oder von dem einzelnen Umfangskanal um die Innenoberfläche des Stempels (6) und benachbart zu dieser zu den Auslassrohren (10).

2. Stempelanordnung nach Anspruch 1, wobei die Einlassöffnungen (16) distaler und die Auslassöffnungen (20) proximaler längs des Stößels (4) angeordnet sind, wobei die Innenoberfläche einen Freiraum zwischen jeder Einlassöffnung und wenigstens einer Auslassöffnung definiert.

3. Stempelanordnung nach Anspruch 1, wobei die ringförmigen Anordnungen der Einlassrohre (8) und der Auslassrohre (20) mit alternierenden Einlass- und Auslassrohren angeordnet sind.

4. Stempelanordnung nach Anspruch 3, wobei die Einlass- und Auslassrohre (8, 20) parallel sind.

5. Stempelanordnung nach Anspruch 1, wobei der Stempel (6) ein proximales Ende aufweist und die Auslassöffnungen (20) nahe dem proximalen Ende des Stempels (6) angeordnet sind.

6. Stempelanordnung nach Anspruch 1, die ferner eine zentrale Öffnung im Stößel (4) für eine Luftströmung zur Unterstützung des Abstreifens des Behälters vom Stempel (6) umfasst.

7. Stempelanordnung nach Anspruch 1, die ferner eine Temperatur-Steuer/Regeleinheit zum Zuführen des Kühlmediums in den Verteiler (12) umfasst.

8. Stempelanordnung nach Anspruch 7, die ferner ein Mittel zum Überwachen der Außentemperatur des Stempels (6) umfasst, um die Kühlmediumtemperatur zu steuern.

9. Stempelanordnung nach Anspruch 1, wobei die Transportrohre (8, 10) aus Materialien mit niedrigen Wärmeübertragungseigenschaften konstruiert sind.

## Revendications

1. Ensemble de poinçon (2) pour produire un corps de récipient en entraînant une coupelle formable à travers des moyens de matrice de type annulaire, l'ensemble de poinçon (2) comprenant :
un vérin (4) ayant des extrémités proximale et distale ;
un poinçon (6) disposé sur l'extrémité distale du vérin (4), le poinçon (6) ayant une surface interne ;
un distributeur (12) relié à l'extrémité proximale du vérin (4) ; **caractérisé par**
un réseau annulaire de tubes d'admission de fluide (8) espacés circonférentiellement dans le vérin (4) pour distribuer un agent fluide de refroidissement à partir du distributeur (12) vers l'extrémité distale du vérin (4) ; et
une pluralité d'orifices d'admission radiaux (16) à partir des tubes d'admission (8) jusqu'à la surface interne, pour distribuer l'agent de refroidissement dans une série de canaux individuels partiellement circonférentiels ou dans un seul canal circonférentiel autour et de manière adjacente à la surface interne du poinçon (6) ;
un réseau annulaire de tubes d'évacuation de fluide (10) espacés circonférentiellement dans le vérin (4) pour retirer l'agent de refroidissement ;
une pluralité d'orifices d'évacuation radiaux (20) à partir de la surface interne jusqu'aux tubes d'évacuation (10), et espacés des orifices d'admission (16) sur la longueur du vérin (4), pour transférer l'agent de refroidissement depuis la série de canaux individuels partiellement circonférentiels ou de l'unique canal circonférentiel autour et de manière adjacente à la surface interne du poinçon (6) vers les tubes d'évacuation (6).

2. Ensemble de poinçon selon la revendication 1, dans lequel les orifices d'admission (16) sont plus distaux et les orifices d'évacuation (20) sont plus proximaux le long du vérin (4), la surface interne définissant un dégagement entre chaque orifice d'admission et au moins un orifice d'évacuation.

3. Ensemble de poinçon selon la revendication 1, dans lequel les réseaux annulaires de tubes d'admission (8) et de tubes d'évacuation (20) sont agencés de manière à ce que les tubes d'admission et d'évacuation alternent.

4. Ensemble de poinçon selon la revendication 3, dans lequel les tubes d'admission et d'évacuation (8, 20) sont parallèles.

5. Ensemble de poinçon selon la revendication 1, dans lequel le poinçon (6) a une extrémité proximale et les orifices d'évacuation (20) sont situés à proximité de l'extrémité proximale du poinçon (6).

6. Ensemble de poinçon selon la revendication 1, comprenant en outre un orifice central dans le vérin (4) pour qu'un écoulement d'air aide à arracher le récipient de la matrice (6).

7. Ensemble de poinçon selon la revendication 1, comprenant en outre une unité de régulation de température pour acheminer l'agent de refroidissement dans le distributeur (12).

8. Ensemble de poinçon selon la revendication 7, comprenant en outre des moyens de surveillance de la température externe du poinçon (6) pour réguler la température de l'agent de refroidissement.

9. Ensemble de poinçon selon la revendication 1, dans lequel les tubes de transfert (8, 10) sont construits à partir de matériaux ayant des propriétés de faible transfert thermique.
